# EUROPÄISCHE PATENTSCHRIFT

(11) **EP 2 966 262 B1**
(45) Veröffentlichungstag und Bekanntmachung des Hinweises auf die Patenterteilung: **28.06.2017**
(21) Anmeldenummer: 14176766.5
(22) Anmeldetag: 11.07.2014
(51) Int. Cl.: F01D 5/26, F01D 5/16

(54) **Turbomaschinenschaufel**
Turbomachine blade
Aube de turbomachine

(43) Veröffentlichungstag der Anmeldung: 13.01.2016
(73) Patentinhaber: MTU Aero Engines AG, 80995 München (DE)
(72) Erfinder: Stiehler, Frank, 04924 Bad Liebenwerda (DE); Hartung, Andreas, 81829 München (DE)

(56) Entgegenhaltungen:
- EP-A1- 2 484 870
- US-A- 2 689 107
- US-A1- 2003 202 883

## Beschreibung

Die Arbeiten, die zu dieser Erfindung geführt haben, wurden gemäß der *Finanzhilfevereinbarung* Nr. CSJU-GAM-SAGE-2008-001 im Zuge des Siebten Rahmenprogramms der Europäischen Union **(*FP7*/*2007-2013*)** für Clean Sky Joint Technology Initiative befördert.

Die vorliegende Erfindung betrifft eine Turbomaschinenschaufel mit wenigstens einem Stimmkörper, eine Turbomaschine, insbesondere Gasturbine, mit einer solchen Turbomaschinenschaufel sowie ein Verfahren zum Herstellen einer solchen Turbomaschinenschaufel.

Aus der EP 2 484 870 A1 ist eine Turbomaschinenschaufel mit einem Schaufelhals bekannt, in dem eine Kalotte geformt ist, welche wahlweise verschiedene Stimmkörpergehäuse aufnehmen kann, in denen unterschiedliche Stimmkörper einzeln geführt sind, um zu Testzwecken oder für unterschiedliche Betriebsbedingungen unterschiedliche Konfigurationen auszubilden.

Die Stimmkörper sind zum Stoßkontakt mit der Schaufel vorgesehen. Denn überraschenderweise hat sich herausgestellt, dass durch solche stoßende Stimmkörper die Frequenzantwort der Schaufel auf, insbesondere aero- oder strukturdynamisch, angeregte Vibrationen deutlich verbessert und die Schaufel somit "verstimmt" werden kann.

Die Stimmkörpergehäuse sind in der Kalotte aufgenommenen und durch Löten befestigt. Nachteilig kann daher die Kalotte eine Wärmedehnung des Stimmkörpergehäuses und damit dessen Geometrie und/oder Anbindung beeinflussen, die für die gewünschten Stoßkontakte präzise abgestimmt sind.

Der Vollständigkeit halber sei zudem auch noch auf die US 2003/0202883 A1 und die US 2,689,107 verwiesen.

Eine Aufgabe einer Ausführung der vorliegenden Erfindung ist es, eine verbesserte Turbomaschine zur Verfügung zu stellen.

Diese Aufgabe wird durch eine Turbomaschinenschaufel mit den Merkmalen des Anspruchs 1 gelöst. Ansprüche 12, 13 stellen eine Turbomaschine mit bzw. ein Verfahren zum Herstellen einer solchen Turbomaschinenschaufel unter Schutz. Vorteilhafte Ausführungsformen der Erfindung sind Gegenstand der Unteransprüche.

Nach einem Aspekt der vorliegenden Erfindung weist eine Turbomaschinenschaufel einen ein- oder mehrteiligen Grundkörper auf. Dieser kann in einer Ausführung urgeformt, insbesondere gegossen, und/oder spanend hergestellt sein bzw. werden, insbesondere mit geometrisch bestimmter Schneide, etwa durch Fräsen, und/oder geometrisch unbestimmter Schneide, etwa durch Schleifen. Er weist in einer Ausführung ein Schaufelblatt zur Strömungsumlenkung eines Arbeitsgases, insbesondere zu komprimierender Luft, die einer Brennkammer einer Gasturbine zugeführt wird, oder Abgas aus einer solchen Brennkammer, auf. An dem Schaufelblatt kann radial innen ein Innendeckband und/oder radial außen ein Außendeckband angeordnet sein. In einer Ausführung ist bzw. wird der Grundkörper, insbesondere form- und/oder stoffschlüssig, mit einem Rotor oder Gehäuse der Turbomaschine verbunden, in einer Weiterbildung mittels eines Schaufelfußes, der radial innen von dem Schaufelblatt angeordnet ist. Gleichermaßen kann der Grundkörper integral mit einem Rotor oder Gehäuse der Turbomaschine ausgebildet sein bzw. werden.

Der Grundkörper weist eine ebene erste Befestigungsfläche mit einer ersten Randkontur auf. Mit dieser ist bzw. wird eine ebene zweite Befestigungsfläche eines separat ausgebildeten Deckels verschweißt, die eine zweite, insbesondere zu der ersten Randkontur kongruente, vorzugsweise konzentrische, Randkontur aufweist. Die erste und/oder zweite Randkontur sind in einer Ausführung kreisförmig, was insbesondere die Herstellung erleichtern kann.

In nachfolgend erläuterter Weise wird bzw. ist eine Stimmkörperanordnung mit wenigstens einem Stimmkörper zum stoßhaften Kontaktieren einer Innenwandung des Deckels in einem oder mehreren Hohlräumen angeordnet bzw. aufgenommen. Unter einem stoßhaften Kontaktieren einer Innenwandung wird vorliegend wie auch in der eingangs genannten EP 2 484 870 A1 insbesondere ein, auch mehrfaches, kurzzeitiges Kontaktieren unter elastischer und/oder plastischer Deformation eines oder beider Stoßpartner mit, wenigstens im Wesentlichen, vollständigem Impulserhalt bzw. -austausch verstanden.

Nach einem Aspekt der vorliegenden Erfindung wird bzw. ist zwischen der ersten und zweiten, kleineren Randkontur ein Spalt ausgebildet. Dies erleichtert, insbesondere in Verbindung mit den ebenen Befestigungsflächen, in einer Ausführung vorteilhaft eine Wärmedehnung beim Verschweißen und/oder im Betrieb der Tarbomaschinenschaufel. Auf diese Weise kann in einer Ausführung vorteilhaft eine Beeinflussung einer Geometrie und/oder Anbindung des Deckels, dessen Innenwandung für den Stoßkontakt präzise abgestimmt ist, reduziert, vorzugsweise vermieden werden. Insbesondere hierzu ist bzw. wird in einer Ausführung der Deckel freistehend an dem Grundkörper befestigt bzw. berührt diesen nur mit seiner zweiten Befestigungsfläche. In einer Ausführung beträgt der Spalt bei 20°C wenigstens 1 mm, insbesondere wenigstens 2 mm, und/oder höchstens 10 mm, insbesondere höchstens 20 mm. Größere Spalte können unnötig den Aufwand zur Herstellung der ersten Befestigungsflächen erhöhen, kleinere Spalte die vorstehend erläuterte vorteilhafte Wirkung, insbesondere freie Wärmedehnung des Deckels, beeinträchtigen.

In einer Ausführung sind bzw. werden ein oder mehreren, insbesondere alle, Stimmkörper der Stimmkörperanordnung in einem oder mehreren Hohlräumen aufgenommen, die jeweils vollständig in dem Deckel ausgebildet sind bzw. werden. Hierdurch kann in einer Ausführung die Stimmkörperanordnung, wenigstens teilweise, in dem Deckel "vormontiert" und der Deckel mit der teilweise oder vollständig vormontierten Stimmkörperanordnung anschließend mit dem Grundkörper verschweißt werden. Zusätzlich oder alternativ kann so in einer Ausführung vorteilhaft eine - umständlichere - Ausbildung von Hohlräumen oder Hohlraumabschnitten im Grundkörper reduziert, vorzugsweise vermieden werden.

Insbesondere hierzu kann der Deckel in einer Ausführung mehrteilig, insbesondere zweiteilig, mit einem grundkörpernächsten Unterteil und einem grundkörperfernsten Oberteil ausgebildet sein bzw. werden, wobei der bzw. die vollständig in dem Deckel ausgebildeten Hohlräumen jeweils wenigstens zwei miteinander kommunizierende Abschnitte aufweisen, insbesondere daraus bestehen, von denen einer in einem Teil, insbesondere dem Unterteil, und der anderen in einem damit verbundenen Teil, insbesondere dem Oberteil, ausgebildet ist.

Zwei oder mehr, insbesondere alle Teile des mehrteiligen Deckels werden bzw. sind in einer Ausführung in gleicher Weise miteinander verbunden wie der Deckel bzw. dessen grundkörpernächstes Unterteil mit dem Grundkörper. Sie können insbesondere miteinander verschweißte, vorzugsweise ebene, Befestigungsflächen aufweisen, zwischen deren Randkonturen vorzugsweise jeweils ein Spalt ausgebildet sein bzw. werden kann. Die für die Befestigung des Deckels am Grundkörper erläuterten Vorteile gelten dann auch für die Befestigung der Deckelteile aneinander. Gleichermaßen können zwei oder mehr, insbesondere alle Teile des mehrteiligen Deckels in einer anderen Ausführung auch in anderer Weise miteinander verbunden werden bzw. sein wie der Deckel bzw. dessen grundkörpernächstes Unterteil mit dem Grundkörper. Hierdurch können einerseits die für die Befestigung des Deckels am Grundkörper erläuterten Vorteile erreicht und zugleich andere Vorteile für die Befestigung der Deckelteile aneinander miteinander kombiniert werden bzw. sein, beispielsweise eine einfachere und/oder zuverlässigere Befestigung.

In einer Ausführung sind bzw. werden ein oder mehrere, insbesondere alle, Stimmkörper der Stimmkörperanordnung in einem oder mehreren Hohlräumen aufgenommen, von denen jeweils wenigstens ein Abschnitt in dem Grundkörper ausgebildet ist bzw. wird. In einer Weiterbildung sind bzw. werden ein oder mehrere, insbesondere alle, diese Hohlräume jeweils vollständig in dem Grundkörper ausgebildet. In einer anderen Ausführung ist bzw. wird jeweils ein erster Abschnitt von einem oder mehreren, insbesondere allen, dieser Hohlräume in dem Grundkörper und ein zweiter Abschnitt dieses Hohlraums in dem Deckel ausgebildet. Hierdurch kann in einer Ausführung der Deckel vorteilhaft flacher bauen. Der erste, in dem Grundkörper ausgebildete Abschnitt weist in einer Ausführung weniger als 40%, insbesondere weniger als 30%, eines Volumens des zweiten, im Deckel ausgebildeten Abschnitts auf. In einer anderen Ausführung weist der erste, in dem Grundkörper ausgebildete Abschnitt mehr als 60%, insbesondere mehr als 70%, eines Volumens des zweiten, im Deckel ausgebildeten Abschnitts auf. Hierdurch kann jeweils eine besonders vorteilhafte Verstimmung erreicht werden.

Insbesondere zum Verschließen eines oder mehrerer vollständig im Grundkörper ausgebildeter Hohlräume oder Hohlraumabschnitte kann der Deckel in einer Ausführung einteilig ausgebildet sein bzw. werden und/oder eine grundraumzugewandte durchgehende ebene Grundfläche aufweisen, die die zweite Befestigungsfläche und die Innenwandung zum stoßhaften Kontaktieren bildet.

Die beiden vorstehenden Ausführungen können kombiniert sein, indem ein oder mehrere Hohlräume vollständig im Deckel und ein oder mehrere weitere Hohlräume wenigstens abschnittsweise im Grundkörper ausgebildet sind bzw. werden. In einer alternativen Ausführung sind bzw, werden, wie vorstehend erläutert, alle Hohlräume vollständig im Deckel oder alle Hohlräume wenigstens abschnittsweise im Grundkörper, insbesondere jeweils vollständig im Grundkörper oder abschnittsweise im Grundkörper und abschnittsweise im Deckel ausgebildet.

In einer Ausführung weisen wenigstens zwei Hohlräume, insbesondere wenigstens zwei vollständig im Deckel oder Grundkörper ausgebildete Hohlräumen, wenigstens zwei jeweils abschnittsweise im Deckel und abschnittsweise im Grundkörper ausgebildete Hohlräume, oder wenigstens ein vollständig im Deckel oder Grundkörper ausgebildeter und wenigstens ein jeweils abschnittsweise im Deckel und abschnittsweise im Grundkörper oder vollständig im Grundkörper bzw. Deckel ausgebildeter Hohlraum, unterschiedliche Formen bzw. Geometrien und/oder unterschiedliche Volumina auf.

In einem oder mehreren dieser unterschiedlichen Hohlräume sind bzw. werden jeweils ein oder mehrere Stimmkörper der Stimmkörperanordnung aufgenommen. In einer Weiterbildung sind bzw. werden in all diesen unterschiedlichen Hohlräumen jeweils ein oder mehrere Stimmkörper der Stimmkörperanordnung aufgenommen. Hierdurch kann vorteilhafterweise eine Verstimmung unterschiedlicher Frequenzen und/oder bei unterschiedlichen Betriebsbedingungen erfolgen.

In einer anderen Weiterbildung ist bzw. wird in wenigstens einem dieser unterschiedlichen Hohlräume kein Stimmkörper der Stimmkörperanordnung aufgenommen. Hierdurch können vorteilhafterweise wahlweise unterschiedliche Hohlräume mit Stimmkörpern bestückt werden. Zusätzlich oder alternativ kann ein solcher unbestückter Hohlraum vorteilhaft als Auffangvolumen für Schweißmaterial dienen.

Insbesondere kann zwischen einem oder mehreren Hohlräumen, in denen jeweils wenigstens ein Stimmkörper der Stimmkörperanordnung aufgenommen ist bzw. wird, und der zweiten Randkontur eine umlaufende Nut in der ersten und/oder zweiten Befestigungsfläche ausgebildet sein bzw. werden. Hierdurch kann vorteilhaft ein Eindringen von aufgeschmolzenem bzw. Schweißmaterial in den bzw. die Hohlräume mit dem bzw, den Stimmkörpern während des Schweißens reduziert, vorzugsweise verhindert werden.

In einer Ausführung ist bzw. wird in einem oder mehreren, vorzugsweise allen, Hohlräumen, insbesondere Hohlräumen, die vollständig im Deckel ausgebildet sind bzw. werden, Hohlräumen, die wenigstens abschnittsweise im Grundkörper ausgebildet sind bzw. werden, und/oder Hohlräumen mit unterschiedlichen Formen und/oder Volumina, jeweils genau ein Stimmkörper aufgenommen bzw, angeordnet. Hierdurch kann in einer Ausführung vorteilhaft eine Stoßcharakteristik einzeln abgestimmt werden bzw. sein.

Zusätzlich oder alternativ sind bzw. werden in einem oder mehreren, vorzugsweise allen, Hohlräumen, insbesondere Hohlräumen, die vollständig im Deckel ausgebildet sind bzw. werden, Hohlräumen, die wenigstens abschnittsweise im Grundkörper ausgebildet sind bzw. werden, und/oder Hohlräumen mit unterschiedlichen Formen und/oder Volumina, jeweils zwei oder mehr Stimmkörper aufgenommen bzw. angeordnet. Hierdurch können in einer Ausführung vorteilhaft zusätzlich Stimmkörper Stöße miteinander ausführen.

In einer Ausführung weisen ein oder mehrere, vorzugsweise alle, in einem Hohlraum aufgenommenen Stimmkörper der Stimmkörperanordnung jeweils in wenigstens einer oder einer einzigen Stoßfreiheitsgradrichtung ein maximales Bewegungsspiel auf, welches zwischen 0,5 mm und 1,5 mm beträgt. Hierdurch kann in einer Ausführung eine vorteilhafte Stoßkinetik dargestellt werden. Zusätzlich oder alternativ beträgt das Bewegungsspiel in der Stoßfreiheitsgradrichtung in einer Ausführung wenigstens das Doppelte, insbesondere wenigstens das Vierfache, eines Führungsspiels in einer Führungsrichtung senkrecht zu der Stoßfreiheitsgradrichtung. Das Führungsspiel beträgt in einer Weiterbildung vorzugsweise weniger als 0,3 mm, insbesondere weniger als 0,1 mm. In einer Ausführung weisen ein oder mehrere, vorzugsweise alle, in einem Hohlraum aufgenommenen Stimmkörper der Stimmkörperanordnung jeweils in zwei oder drei zueinander senkrechten Stoßfreiheitsgradrichtungen jeweils ein maximales Bewegungsspiel auf, welches zwischen 0,5 mm und 1,5 mm beträgt. Hierdurch können insbesondere unterschiedliche Eigenformen vorteilhaft verstimmt werden.

In einer Ausführung sind bzw. werden ein oder mehrere, vorzugsweise alle, Stimmkörper der Stimmkörperanordnung jeweils in einem Hohlraum aufgenommen, welcher luftdicht ist. Hierdurch kann vorteilhaft ein Gasaustausch im Betrieb und/oder ein Eintritt von Flüssigkeit verhindert werden. Entsprechend sind in einer Ausführung der bzw. die Hohlräume luftgefüllt bzw. flüssigkeitsfrei. Wie einleitend erläutert, basiert die vorteilhafte Verstimmung der Frequenzantwort nicht auf dissipativer Dämpfung, wie sie herkömmlich durch Reibung von Dämpfungskörpern an Hohlraumwänden und/oder in Flüssigkeit angestrebt wird, stattdessen ist eine möglichst ungehinderte Stoßkinetik vorteilhaft.

In einer Ausführung sind bzw. werden die erste und/oder zweite Befestigungsfläche und/oder, insbesondere ebene, Befestigungsflächen von zwei oder mehr Deckelteilen eines mehrteiligen Deckels, die miteinander verbunden, insbesondere verschweißt, werden bzw. sind, urgeformt, vorzugsweise gegossen. Hierdurch können diese Befestigungsflächen einfach und/oder günstig hergestellt werden. In einer anderen Ausführung sind bzw. werden die erste und/oder zweite Befestigungsfläche und/oder, insbesondere ebene, Befestigungsflächen von zwei oder mehr Deckelteilen eines mehrteiligen Deckels, die miteinander verbunden, insbesondere verschweißt, werden bzw. sind, spanend hergestellt, insbesondere mit geometrisch bestimmter Schneide, vorzugsweise durch Fräsen, oder mit geometrisch unbestimmter Schneide, vorzugsweise durch Schleifen. Hierdurch können diese Befestigungsfläche präzisen hergestellt und/oder Schaufeln nachträglich verstimmt werden.

In einer Ausführung sind bzw. werden die erste und zweite Befestigungsfläche und/oder, insbesondere ebene, Befestigungsflächen von zwei oder mehr Deckelteilen eines mehrteiligen Deckels, die miteinander verschweißt werden bzw. sind, ohne Zusatz(schweiß)werkstoff miteinander verschweißt. Hierdurch kann eine Beeinträchtigung der Stoßcharakteristik durch beim Schweißen in einen Hohlraum mit Stimmkörper(n) eintretenden Zusatzwerkstoff reduziert, vorzugsweise vermieden werden.

Die erste Befestigungsfläche ist bzw. wird erfindungsgemäß radial innen von einem Schaufelblatt der Turbomaschinenschaufel, insbesondere auf einer schaufelblattabgewandten Oberfläche eines Innendeckbandes, oder radial außen von dem Schaufelblatt, insbesondere auf einer schaufelblattabgewandten Oberfläche eines Außendeckbandes angeordnet. Durch eine Anordnung radial außen kann eine besonders starke Beeinflussung der Frequenzantwort erreicht werden. Durch eine Anordnung radial innen kann ein kleineres Trägheitsmoment der Turbomaschinenschaufel erreicht und/oder ein größerer Bauraum genutzt werden.

Eine hier beschriebene Turbomaschinenschaufel wird bzw. ist nach einem Aspekt der vorliegenden Erfindung als Leit- oder Laufschaufel eines Leit- bzw. Laufgitters einer Verdichter- oder Turbinenstufe einer Turbomaschine, insbesondere Gasturbine, verwendet.

Zum Herstellen einer hier beschriebenen Turbomaschinenschaufel werden nach einem Aspekt der vorliegenden Erfindung der oder die Stimmkörper der Stimmkörperanordnung in dem oder den Hohlräumen angeordnet.

Insbesondere anschließend wird die ebene zweite Befestigungsfläche des Deckels mit der ebenen ersten Befestigungsfläche des Grundkörpers derart verschweißt, dass zwischen der ersten und zweiten Randkontur der Spalt ausgebildet ist bzw. wird. Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen perspektivischen Teilschnitt einer Turbomaschinenschaufel einer Turbomaschine nach einer Ausführung der vorliegenden Erfindung; und
- Fig. 2: einen perspektivischen Teilschnitt einer Turbomaschinenschaufel einer Turbomaschine nach einer weiteren Ausführung der vorliegenden Erfindung.

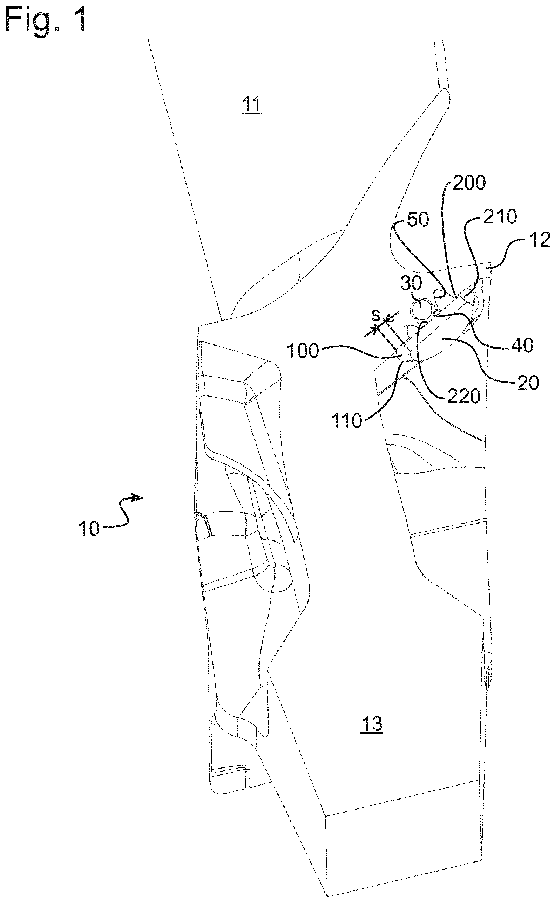

Fig. 1 zeigt einen perspektivischen Teilschnitt einer Turbomaschinenschaufel einer Turbomaschine nach einer Ausführung der vorliegenden Erfindung.

Diese weist einen Grundkörper 10 mit einem Schaufelblatt 11, einem radial inneren Innendeckband 12 und einem Schaufelfuß 13 auf.

Der Grundkörper 10 weist eine ebene erste Befestigungsfläche 100 mit einer kreisförmigen ersten Randkontur 110 auf. Mit dieser ist bzw. wird eine ebene zweite Befestigungsfläche 200 eines separat ausgebildeten Deckels 20 verschweißt, die eine kreisförmige zweite, zu der ersten Randkontur konzentrische Randkontur 210 aufweist.

Zwischen dieser ersten Randkontur 110 und dieser zweiten, kleineren Randkontur 210 wird bzw. ist ein Spalt s ausgebildet. Der Deckel 20 ist bzw. wird freistehend an dem Grundkörper 10 befestigt bzw. berührt diesen nur mit seiner zweiten Befestigungsfläche 200.

Die Turbomaschinenschaufel weist weiter eine Stimmkörperanordnung mit einem einzigen kugelförmige Stimmkörper 30 auf, der in einem Hohlraum 40 aufgenommen wird bzw. ist.

In der Ausführung der Fig. 1 sind dieser Hohlraum 40 sowie eine umlaufende Nut 50 variierender Höhe zwischen diesem Hohlraum 40 und der zweiten Randkontur 210 jeweils vollständig in dem Grundkörper 10 ausgebildet, so dass die Nut 50 in der ersten Befestigungsfläche 100 ausgebildet ist. Hohlraum 40 und Nut 50 sind bzw. werden durch eine Innenwandung 220 des Deckels 20 verschlossen, welche in dieser Ausführung gemeinsam mit der zweiten Befestigungsfläche 200 die durchgehende ebene grundkörperzugewandte Unterseite des einteiligen Deckels 20 bildet.

Zusätzlich oder alternativ zu der umlaufenden Nut 50 können auch weitere Hohlräume vorgesehen sein, die jeweils mit einem oder mehreren Stimmkörpern bestückt sind bzw. werden oder nicht mit Stimmkörpern bestückt sind bzw. werden. Solche weiteren Hohlräume können unterschiedliche Formen bzw. Geometrien und/oder unterschiedliche Volumina aufweisen. So entspricht eine Ausführung mit zwei weiteren, unbestückten Hohlräumen unterschiedlicher Volumina im Teilschnitt der Fig. 1 der vorstehend erläuterten Ausführung mit einer umlaufenden Nut 50, wobei die beiden im Teilschnitt erkennbaren Schnittflächen der Nut 50 dann Schnittflächen dieser beiden weiteren Hohlräume darstellen.

Der Stimmkörper 30 weist in einer Stoßfreiheitsgradrichtung (diagonal von links oben nach rechts unten in Fig. 1) ein Bewegungsspiel auf, welches zwischen 0,5 mm und 1,5 mm beträgt. In einer Führungsrichtung (diagonal von links unten nach rechts oben in Fig. 1) senkrecht zu dieser Stoßfreiheitsgradrichtung beträgt ein Führungspiel hingegen weniger als 0,3 mm, insbesondere weniger als 0,1 mm.

Erste und zweite Befestigungsfläche 100, 200 werden bzw. sind ohne Zusatzwerkstoff miteinander luftdicht verschweißt, so dass der Hohlraum 40 luftdicht und luftgefüllt bzw. flüssigkeitsfrei ist.

Die erste Befestigungsfläche 100 ist radial innen von dem Schaufelblatt 11 der Turbomaschinenschaufel 10 auf der schaufelblattabgewandten Oberfläche des Innendeckbandes 12 angeordnet.

Zum Herstellen der hier beschriebenen Turbomaschinenschaufel werden der Hohlraum 40 und die umlaufende Nut bzw. die weiteren Hohlräume 50 in dem Grundkörper 10 hergestellt. Vorab, dabei oder anschließend wird die erste Befestigungsfläche 100 hergestellt. Dann wird der Stimmkörper 30 in dem Hohlraum angeordnet. Anschließend wird die ebene zweite Befestigungsfläche 200 des Deckels 20 mit der ebenen ersten Befestigungsfläche 100 des Grundkörpers 10 derart verschweißt, dass zwischen der ersten und zweiten Randkontur 110, 210 der Spalt s ausgebildet ist bzw. wird.

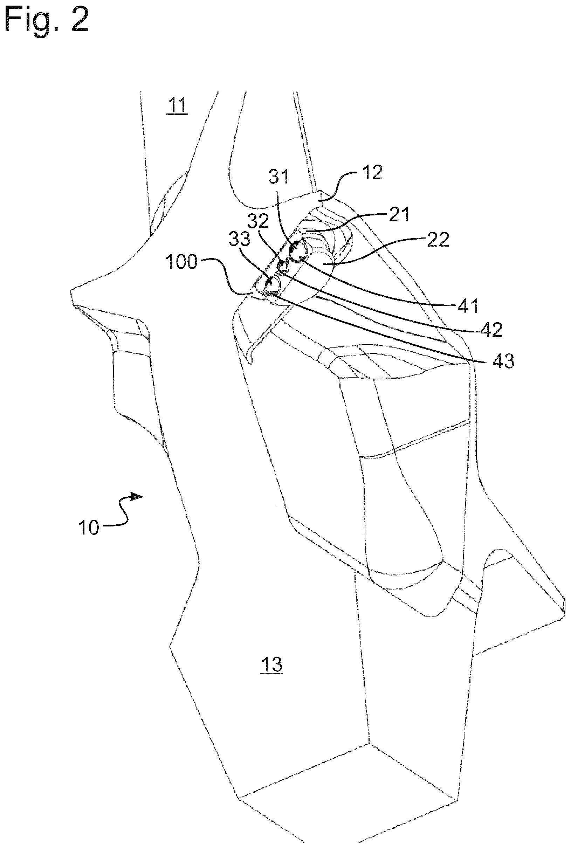

Fig. 2 zeigt in Fig. 1 entsprechender Darstellung eine Turbomaschinenschaufel einer Turbomaschine nach einer weiteren Ausführung der vorliegenden Erfindung. Einander entsprechende Merkmale sind durch identische Bezugszeichen identifiziert, so dass auf die vorstehende Beschreibung Bezug genommen und nachfolgend nur auf Unterschiede eingegangen wird.

In der Ausführung der Fig. 2 sind drei unterschiedliche Stimmkörper 31-33 jeweils einzeln in einem Hohlraum 41,42 bzw. 43 aufgenommen. Diese Hohlräume 41-43 sind bzw. werden jeweils vollständig in dem Deckel ausgebildet.

Hierzu wird bzw. ist der Deckel in der Ausführung der Fig. 2 zweiteilig mit einem grundkörpernächsten Unterteil 21 und einem grundkörperfernsten Oberteil 22 ausgebildet, wobei die vollständig in dem Deckel ausgebildeten Hohlräumen 41-43 jeweils aus zwei miteinander kommunizierenden Abschnitten bestehen, von denen einer in dem Unterteil und der andere in dem damit verbundenen Oberteil, ausgebildet ist. Nur zur Verdeutlichung sind die Bereiche der Stimmkörper 31-33, die in den Abschnitten in dem Unterteil 21 des Deckels angeordnet sind, schwarz eingefärbt.

Ober- und Unterteil des mehrteiligen Deckels werden bzw. sind in gleicher Weise miteinander verbunden wie der Deckel bzw. dessen grundkörpernächstes Unterteil 21 mit dem Grundkörper 10. Sie weisen entsprechend miteinander verschweißte, ebene Befestigungsflächen auf.

In der Ausführung der Fig. 2 bilden die Wände der vollständig im Deckel ausgebildeten Hohlräume 41-43 die Innenwandung des zweiteiligen Deckels zum stoßhaften Kontaktieren der Stimmkörper 31-33.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführunggen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Turbomaschinenschaufel mit einem Grundkörper (10), der eine ebene erste Befestigungsfläche (100) mit einer ersten Randkontur (110) aufweist, einem Deckel (20; 21, 22), der eine ebene zweite Befestigungsfläche (200) mit einer zweiten Randkontur (210) aufweist, welche mit der ersten Befestigungsfläche verschweißt ist, und einer Stimmkörperanordnung mit wenigstens einem Stimmkörper (30; 31-33) zum stoßhaften Kontaktieren einer Innenwandung (220) des Deckels, wobei die erste Befestigungsfläche (100) radial innen oder außen von einem Schaufelblatt (11) zur Strömungsumlenkung angeordnet ist;
**dadurch gekennzeichnet, dass**
zwischen der ersten und zweiten Randkontur ein Spalt (s) ausgebildet ist.

2. Turbomaschinenschaufel nach Anspruch 1, **dadurch gekennzeichnet, dass** der Deckel (20; 21, 22) freistehend an dem Grundkörper (10) angeordnet ist.

3. Turbomaschinenschaufel nach einem der vorhergehenden Ansprüche, **dadurch gekennzeichnet, dass** wenigstens ein Stimmkörper (31-33) der Stimmkörperanordnung in einem Hohlraum (41-43) aufgenommen ist, der vollständig in dem, insbesondere mehrteiligen, Deckel (21, 22) ausgebildet ist.

4. Turbomaschinenschaufel nach einem der Ansprüche 1-3, **dadurch gekennzeichnet, dass** wenigstens ein Stimmkörper (30) der Stimmkörperanordnung in einem Hohlraum (40) aufgenommen ist, der wenigstens abschnittsweise in dem Grundkörper (10) ausgebildet ist.

5. Turbomaschinenschaufel nach einem der vorhergehenden Ansprüche, **gekennzeichnet durch** wenigstens zwei Hohlräume (40, 50; 41-43) mit unterschiedlicher Form und/oder unterschiedlichem Volumen, wobei in wenigstens einem dieser Hohlräumen wenigstens ein Stimmkörper (30; 31-33) der Stimmkörperanordnung aufgenommen ist.

6. Turbomaschinenschaufel nach einem der vorhergehenden Ansprüche, **dadurch gekennzeichnet, dass** wenigstens ein Stimmkörper (30; 31-33) der Stimmkörperanordnung in einem Hohlraum (40; 41-43) aufgenommen ist, wobei zwischen diesem Hohlraum und der zweiten Randkontur (210) eine umlaufende Nut (50) in der ersten und/oder zweiten Befestigungsfläche (100, 200) ausgebildet ist.

7. Turbomaschinenschaufel nach einem der vorhergehenden Ansprüche, **dadurch gekennzeichnet, dass** wenigstens ein Stimmkörper (30; 31-33) der Stimmkörperanordnung in einem Hohlraum (40; 41-43) aufgenommen ist und in einer Stößfreiheitsgradrichtung ein Bewegungsspiel aufweist, welches wenigstens das Doppelte, insbesondere wenigstens das Vierfache, eines Führungsspiels in einer Führungsrichtung senkrecht zu der Stoßfreiheitsgradrichtung und/oder zwischen 0,5 mm und 1,5 mm beiträgt.

8. Turbomaschinenschaufel nach einem der vorhergehenden Ansprüche, **dadurch gekennzeichnet, dass** wenigstens ein Stimmkörper (30; 31-33) der Stimmkörperanordnung in einem Hohlraum (40; 41-43) aufgenommen ist, welcher luftdicht ist.

9. Turbomaschinenschaufel nach einem der vorhergehenden Ansprüche, **dadurch gekennzeichnet, dass** die erste und/oder zweite Befestigungsfläche (100, 200) urgeformt oder, insbesondere mit bestimmter oder unbestimmter Schneide, spanend hergestellt ist.

10. Turbomaschinenschaufel nach einem der vorhergehenden Ansprüche, **dadurch gekennzeichnet, dass** die erste und zweite Befestigungsfläche (100, 200) ohne Zusatzwerkstoff miteinander verschweißt sind.

11. Turbomaschinenschaufel nach einem der vorhergehenden Ansprüche, **dadurch gekennzeichnet, dass** die erste Befestigungsfläche (100) auf einer schaufelblattabgewandten Oberfläche eines Innen- oder Außendeckbandes (12) angeordnet ist.

12. Turbomaschine, insbesondere Gasturbine, mit wenigstens einer Verdichter- und/oder Turbinenstufe mit wenigstens einem Leit- und/oder Laufgitter mit wenigstens einer Turbomaschinenschaufel nach einem der vorhergehenden Ansprüche.

13. Verfahren zum Herstellen einer Turbomaschinenschaufel nach einem der vorhergehenden Ansprüche, wobei die Stimmkörper (30; 31-33) der Stimmkörperanordnung in wenigstens einem, wenigstens abschnittsweise in dem Deckel (20; 21, 22) und/oder Grundkörper (10) ausgebildeten, Hohlraum (40; 41-43) angeordnet werden und, insbesondere anschließend, die ebene zweite Befestigungsfläche (200) des Deckels mit der ebenen ersten Befestigungsfläche (100) des Grundkörpers derart verschweißt wird, dass zwischen der ersten und zweiten Randkontur (110, 210) der Spalt (s) ausgebildet ist.

14. Verfahren nach dem vorhergehenden Anspruch, **dadurch gekennzeichnet, dass** die erste und/oder zweite Befestigungsfläche (100, 200) urgeformt oder, insbesondere mit bestimmter oder unbestimmter Schneide, spanend hergestellt wird.

15. Verfahren nach einem der beiden vorhergehenden Ansprüche, **dadurch gekennzeichnet, dass** die erste und zweite Befestigungsfläche (100, 200) ohne Zusatzwerkstoff miteinander verschweißt werden.

## Claims

1. A turbomachine blade with a base body (10) having a flat first mounting surface (100) with a first edge contour (110), a lid (20; 21, 22) having a flat second mounting surface (200) with a second edge contour (210) that is welded to the first mounting surface, and a tuning element arrangement with at least one tuning element (30; 31-33) for impact-contacting an inner wall (220) of the lid, with the first mounting surface (100) being arranged radially inwardly or outwardly from am airfoil (11) for flow deflection;
**characterized in that**
a gap (s) is formed between the first and second edge contour.

2. The turbomachine blade as set forth in claim 1, **characterized in that** the lid (20; 21, 22) is arranged so as to be freestanding on the base body (10).

3. The turbomachine blade as set forth in any one of the preceding claims, **characterized in that** at least one tuning element (31-33) of the tuning element arrangement is received in a hollow space (41-43) that is formed completely in the lid (21, 22), which is particularly composed of multiple parts.

4. The turbomachine blade as set forth in any one of the claims 1 to 3, **characterized in that** at least one tuning element (30) of the tuning element arrangement is received in a hollow space (40) that is formed at least partially in the base body (10).

5. The turbomachine blade as set forth in any one of the preceding claims, **characterized by** at least two hollow spaces (40, 50; 41-43) having different shapes and/or different volumes, with at least one tuning element (30; 31-33) of the tuning element arrangement being received in at least one of these hollow spaces.

6. The turbomachine blade as set forth in any one of the preceding claims, **characterized in that** at least one tuning element (30; 31-33) of the tuning element arrangement is received in a hollow space (40; 41-43), with a circumferential groove (50) being embodied in the first and/or second mounting surface (100, 200) between this hollow space and the second edge contour (210).

7. The turbomachine blade as set forth in any one of the preceding claims, **characterized in that** at least one tuning element (30; 31-33) of the tuning element arrangement is received in a hollow space (40; 41-43) and has a movement clearance in a direction having a degree of freedom from shock that is at least two times, particularly at least four times as great as a guide clearance in a guide direction perpendicular to the direction having a degree of freedom from shock and/or between 0.5 mm and 1.5 mm.

8. The turbomachine blade as set forth in any one of the preceding claims, **characterized in that** at least one tuning element (30; 31-33) of the tuning element arrangement is received in a hollow space (40; 41-43) that is airtight.

9. The turbomachine blade as set forth in any one of the preceding claims, **characterized in that** the first and/or second mounting surface (100, 200) is cast, or, particularly with a defined or undefined cutting edge, machined.

10. The turbomachine blade as set forth in any one of the preceding claims, **characterized in that** the first and second mounting surfaces (100, 200) are welded to one another without filler material.

11. The turbomachine blade as set forth in any one of the preceding claims, **characterized in that** the first mounting surface (100) is arranged on a surface of an inner or outer shroud (12) facing away from an airfoil.

12. A turbomachine, particularly gas turbine, with at least one compressor and/or turbine stage with at least one guide vane cascade and/or rotor blade cascade with at least one turbomachine blade as set forth in any one of the preceding claims.

13. A method for manufacturing a turbomachine blade as set forth in any one of the preceding claims, wherein the tuning elements (30; 31-33) of the tuning element arrangement are arranged in at least one hollow space (40; 41-43) formed at least partially in the lid (20; 21, 22) and/or base body (10) and, particularly subsequently, the flat second mounting surface (200) of the lid is welded with the flat first mounting surface (100) of the base body such that the gap (s) is formed between the first and second edge contour (110, 210).

14. The method as set forth in any one of the preceding claims, **characterized in that** the first and/or second mounting surface (100, 200) is cast, or, particularly with a defined or undefined cutting edge, machined.

15. The method as set forth in any one of the preceding claims, **characterized in that** the first and second mounting surfaces (100, 200) are welded to one another without filler material.

## Revendications

1. Aube de turbomachine avec un corps de base (10), qui présente une première surface de fixation plane (100) avec un premier contour de bord (110), un couvercle (20; 21, 22) qui présente une seconde surface de fixation plane (200) avec un second contour de bord (210), qui est soudée à la première surface de fixation, et un agencement de corps de calage avec au moins un corps de calage (30; 31-33) pour venir en contact résistant aux chocs d'une paroi interne (220) du couvercle, dans laquelle la première surface de fixation (100) est agencée radicalement vers l'intérieur ou l'extérieur d'une aube de pale (11) pour dévier l'écoulement;
**caractérisée en ce que**
un intervalle (s) est formé entre le premier et le second contour de bord.

2. Aube de turbomachine selon la revendication 1, **caractérisée en ce que** le couvercle (20; 21, 22) est agencé librement sur le corps de base (10).

3. Aube de turbomachine selon l'une quelconque des revendications précédentes, **caractérisée en ce qu'**au moins un corps de calage (31-33) de l'agencement de corps de calage est reçu dans un espace creux (41-43), qui est formé complètement dans le couvercle (21, 22), en particulier en plusieurs parties.

4. Aube de turbomachine selon l'une quelconque des revendications 1 - 3, **caractérisée en ce qu'**au moins un corps de calage (30) de l'agencement de corps de calage est reçu dans un espace creux (40) qui est formé au moins par sections dans le corps de base (10).

5. Aube de turbomachine selon l'une quelconque des revendications précédentes, **caractérisée par** au moins deux espaces creux (40, 50; 41-43) de forme différente et/ou de volume différent, dans laquelle au moins un corps de calage (30; 31-33) de l'agencement de corps de calage est reçu dans au moins l'un de ces espaces creux.

6. Aube de turbomachine selon l'une quelconque des revendications précédentes, **caractérisée en ce qu'**au moins un corps de calage (30; 31-33) de l'agencement de corps de calage est reçu dans un espace creux (40; 41-43), dans laquelle il est formé entre cet espace creux et le second contour de bord (210) une rainure circonférentielle (50) dans la première et/ou la seconde surface de fixation (100, 200).

7. Aube de turbomachine selon l'une quelconque des revendications précédentes, **caractérisée en ce qu'**au moins un corps de calage (30; 31-33) de l'agencement de corps de calage est reçu dans un espace creux (40; 41-43) et présente dans une direction de degrés de liberté de chocs un jeu de déplacement qui atteint au moins deux fois, en particulier au moins quatre fois un jeu de guidage dans une direction de guidage perpendiculairement à la direction de degrés de liberté de chocs et/ou entre 0,5 mm et 1,5mm.

8. Aube de turbomachine selon l'une quelconque des revendications précédentes, **caractérisée en ce qu'**au moins un corps de calage (30; 31-33) de l'agencement de corps de calage est reçu dans un espace creux (40; 41-43) qui est étanche à l'air.

9. Aube de turbomachine selon l'une quelconque des revendications précédentes, **caractérisée en ce que** la première et/ou la seconde surface de fixation (100, 200) est ou sont de forme originale ou fabriquées, en particulier avec des coupes déterminées ou indéterminées, par usinage.

10. Aube de turbomachine selon l'une quelconque des revendications précédentes, **caractérisée en ce que** la première et la seconde surface de fixation (100, 200) sont soudées l'une à l'autre sans matériau d'appoint.

11. Aube de turbomachine selon l'une quelconque des revendications précédentes, **caractérisée en ce que** la première surface de fixation (100) est agencée sur une surface opposée à l'aube de pale d'un anneau de renforcement interne ou externe (12).

12. Turbomachine, en particulier turbine à gaz, avec au moins un étage de compresseur et/ou de turbine ayant au moins un réseau conducteur et/ou mobile avec au moins une aube de turbomachine selon l'une quelconque des revendications précédentes.

13. Procédé de fabrication d'une aube de turbomachine selon l'une quelconque des revendications précédentes, dans lequel les corps de calage (30; 31-33) de l'agencement de corps de calage sont agencés dans au moins une espace creux (40; 41-43) formé au moins par sections dans le couvercle (20; 21, 22) et/ou le corps de base (10) et, en particulier à la suite, la seconde surface de fixation plane (200) du couvercle est soudée à la première surface de fixation plane (100) du corps de base en sorte que soit formé l'intervalle (s) entre le premier et le second contour de bord (110, 210).

14. procédé selon l'une quelconque des revendications précédentes, **caractérisé en ce que** la première et/ou la seconde surface de fixation (100, 200) a ou ont une forme originale ou est, en particulier avec des coupes déterminées ou indéterminées, fabriquée par usinage.

15. Procédé selon l'une quelconque des deux revendications précédentes, **caractérisé en ce que** la première et la seconde surface de fixation (100, 200) sont soudées l'une à l'autre sans matériau d'appoint.
